(19) Europäisches Patentamt

European Patent Office

Office européen des brevets

(11) Publication number: **0 420 326 B1**

## (12) EUROPEAN PATENT SPECIFICATION

(45) Date of publication of patent specification: **15.02.95**    (51) Int. Cl.6: **C10G 35/095**

(21) Application number: **90202497.5**

(22) Date of filing: **20.09.90**

(54) **Process for upgrading a sulphur-containing feedstock.**

(30) Priority: **07.03.90 GB 9005143**
**26.09.89 GB 8921670**

(43) Date of publication of application:
**03.04.91 Bulletin  91/14**

(45) Publication of the grant of the patent:
**15.02.95 Bulletin  95/07**

(84) Designated Contracting States:
**AT BE CH DE ES FR GB IT LI NL SE**

(56) References cited:
**EP-A- 0 131 975**
**EP-A- 0 262 049**
**EP-A- 0 271 264**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **Maxwell, Ian Ernest**
**Carel van Bylandtlaan 30**
**NL-2596 HR Den Haag (NL)**
Inventor: **Klazinga, Aan Hendrik**
**Badhuisweg 3**
**NL-1031 CM Amsterdam (NL)**
Inventor: **Muller, Frederik, c/o Kon.Shell**
**Lab.,HCP 11**
**Badhuisweg 3**
**NL-1031 CM Amsterdam (NL)**
Inventor: **Gilson, Jean-Pierre**
**Badhuisweg 3**
**NL-1031 CM Amsterdam (NL)**
Inventor: **Grandvallet, Pierre**
**Badhuisweg 3**
**NL-1031 CM Amsterdam (NL)**

Rank Xerox (UK) Business Services
(3.10/3.09/3.3.3)

**Description**

The present invention relates to a process for upgrading a sulphur-containing feedstock and is particularly concerned with improving the quality of a feedstock which comprises hydrocarbons boiling in the gasoline range obtained by catalytic cracking.

Gasoline obtained by catalytic cracking requires further processing before it can satisfactorily meet the present day stringent requirements for high octane and low sulphur content. Thus catalytically cracked gasoline has a comparatively high olefin content, a low aromatics content and if there has been no initial treatment of the feedstock, an unacceptable high sulphur content. Quality improvement may be carried out by catalytic reforming with platinum-containing reforming catalysts. However, the presence of sulphur- and nitrogen-containing compounds in the reformer feedstock reduces the catalyst performance and removal of such compounds by catalytic hydrotreatment is considered necessary prior to reforming, with a consequent increase in cost.

It has been proposed in accordance with EP-A-271264 to employ a platinum-containing Y-type zeolite catalyst in a single stage process for reducing the sulphur content and increasing the octane number of an olefin-containing feedstock. However, as mentioned above, platinum-containing catalysts are readily poisoned by sulphur- and nitrogen-containing compounds; they are also expensive and difficult to regenerate. There is therefore a need to provide an alternative upgrading process which does not rely on platinum and which can be used with sulphur-containing feedstocks without the requirement for initial hydrotreatment.

EP-A-252705 describes a process for producing aromatic compounds from feedstocks containing at least 50 %wt $C_{2-12}$ aliphatic hydrocarbons, using a gallium-containing ZSM-5 type catalyst having a silica/alumina mole ratio greater than 70. The process is exemplified solely by the aromatization of n-hexane to an aromatics-containing product, the aromatics selectivity being increased when the catalyst has been prepared by insertion of the gallium into the framework of the zeolite under alkaline conditions. EP-A-252705 contains no teaching to suggest that the process would be applicable to a sulphur-containing commercial mixed feedstock such as gasoline obtained by catalytic cracking, let alone teaching to the effect that use of such a catalyst would promote the simultaneous aromatization and desulphurization of a sulphur-containing feedstock. Indeed the teaching of the above-mentioned EP-A-271264, which shares the same applicant as EP-A-252705, is that, although many crystalline silicate zeolites are now known to the prior art, it is necessary to resort to a noble metal-containing crystalline zeolite catalyst in order to effect simultaneous reduction of sulphur content and increase of octane when processing an olefinic gasoline from cracking processes.

Surprisingly, we have found that a (mixed) feedstock containing an unacceptably high portion of sulphur and substantially boiling in the gasoline range, suitably a feedstock derived from catalytic cracking, can simultaneously be upgraded in respect of aromatics and sulphur content using a catalyst which comprises a crystalline (metallo)silicate having a specific X-ray diffraction pattern, and at least one metal of the group of Ga, Mo, W and Zn.

Accordingly, the present invention relates to a process for upgrading a sulphur-containing feedstock comprising a hydrocarbon mixture substantially boiling in the gasoline range which process comprises contacting the feedstock with a catalyst at a temperature of from 350 to 600 °C, a pressure of from 1 to 40 x $10^5$ Pa (1 to 40 bar) and a space velocity of from 0.1 to 10 g/g/h, and recovering therefrom a product boiling in the gasoline range of increased aromaticity and decreased sulphur content, which catalyst comprises a metal(M)-containing crystalline (metallo)silicate having an X-ray diffraction pattern containing the four strongest lines at interplanar spacings (d) expressed in Å, of 11.1 ± 0.2, 10.0 ± 0.2, 3.84 ± 0.07 and 3.72 ± 0.06, wherein M is at least one of the group of Ga, Mo, W and Zn, and the crystalline metallo-silicate comprises a crystalline aluminosilicate having a $SiO_2/Al_2O_3$ molar ratio of at least 20, or an iron-containing (alumino)silicate having a $SiO_2/Fe_2O_3$ molar ratio of 25 to 1000, and in case alumina is present a $SiO_2/Al_2O_3$ molar ratio of 20 to 1200. It should further be noted that a process for upgrading gasolines is known from EP-A-0131975 wherein use is made of a mixture of two catalysts, one of which is a zinc-containing composition which, in addition to zinc, comprises chromium and/or aluminium, the other being a particular crystalline metal silicate.

The X-ray data quoted above was obtained of the Cu $K_\alpha$ X-rays as is well known in the art.

The hydrocarbon mixture boiling in the gasoline range is preferably obtained by catalytic cracking although it may be obtained by other cracking processes such as thermal cracking, delayed coking, visbreaking and flexicoking. Such gasoline feedstocks usually contain unacceptable levels of sulphur, usually more than 50 ppmw, often above 100 ppmw. Gasoline feedstocks containing more than 250 ppmw, or even more than 500 ppmw of sulphur are suitably upgraded in a process according to the present invention.

2

Other suitable feedstocks to be processed in accordance with the present invention comprise substantially naphthenes-containing hydrocarbon mixtures, for instance straight run naphthas, or mixtures of hydrocarbonaceous material which may be derived from a cracking process and substantially naphthenes-containing hydrocarbonaceous material.

The feedstock to be processed is suitably a mixture obtained by catalytic cracking, usually fluid catalytic cracking of heavy hydrocarbon oils, such as atmospheric gas oils, vacuum gas oils, deasphalted vacuum residues and mixtures thereof. The feed used by preference is a gas oil. Fluid catalytic cracking on a commercial scale is usually carried out in a continuous process using an arrangement which consists substantially of a vertically arranged cracking reactor and a catalyst regenerator. The oil to be cracked is brought in contact with hot regenerated catalyst coming from the regenerator. The mixture of oil and catalyst is passed through the reactor section in an upward direction. In the reactor section coke is deposited on the catalyst as a result of which the catalyst is deactivated. The deactivated catalyst is separated from the product and, after stripping, transported to the regenerator. The cracked product is separated into a light fraction having a high content of $C_3$ to $C_4$ olefins, a gasoline fraction and several heavy fractions, such as a light cycle oil, a heavy cycle oil and a slurry oil.

The sulphur-containing feedstock may consist entirely of a fraction substantially boiling in the gasoline fraction, i.e. substantially boiling in the range of $C_4$ - 220 °C. However, other light components, capable of benefiting from aromatization, may be included in the feedstock and co-processed therewith, for example, a mixture substantially comprising normally gaseous olefins and/or paraffins such as $C_{2-5}$ olefins and/or $C_7$ paraffins.

While the full gasoline boiling range fraction from the cracking reactor may be included in the feedstock, it is preferred to employ as hydrocarbon mixture a cut thereof substantially boiling in the range of 70 to 220 °C, preferably in the range of 70 to 180 °C. Preferably, the sulphur-containing feedstock consists essentially of a hydrocarbon mixture boiling in the gasoline range. Hydrogen may be co-processed with the gasoline feedstock and may improve the desulphurization, if employed in quantities compatible with an acceptable gas make.

The catalyst to be used comprises a crystalline metallo-silicate such as ZSM-5, iron-containing crystalline alumino-silicates or iron-containing crystalline silicates having the X-ray diffraction pattern as described hereinbefore.

Suitably the catalyst comprises from 0.01 to 10% by weight, preferably from 0.1 to 5% by weight of the metal(s). Preferably, gallium or zinc is used as metal, more preferably gallium.

The crystalline metallo-silicates may be prepared by methods known in the art, for example from aqueous solution containing the following compounds: one or more compounds of an alkali metal, one or more organic nitrogen compounds (RN) containing an organic cation or from which an organic cation is formed during the preparation of the (metallo)silicate, one or more silicon compounds and one or more aluminium compounds. Preparation is effected by maintaining the mixture at an elevated temperature until the (metallo)silicate has been formed and then separating the (metallo)silicate crystals from the mother liquor and washing, drying and calcining the crystals.

Many synthetic routes exist to prepare these catalysts. An extensive discussion can be found in "Hydrothermal Chemistry of Zeolites" by R.M. Barrer, Academic Press, New York, 1982.

The crystalline (metallo)silicates as prepared often contain alkali metal ions. By means of suitable exchange means these can be replaced by other cations, such as hydrogen ions or ammonium ions. The crystalline metallo-silicates employed in the process according to the present invention preferably have an alkali metal content of less than 0.05 % by weight. In the process according to the present invention the crystalline metallo-silicates can be used as such or in combination with an inert binding material, such as kaolin or bentonite.

The metal(s) is (are) preferably introduced into the silicate after crystallization of the metallo-silicate, for instance by post-impregnation. This is suitably effected by ion exchange of the metallo-silicate, preferably in its $H^+$ or ammonium form, under neutral or acidic conditions with an aqueous solution of one or more metal salts of the appropriate metal, followed by drying and calcining for a period of preferably from 0.1 to 10 hours at a temperature of preferably from 400 to 700 °C. In case gallium is used as metal, preferably gallium-containing metal salts such as gallium sulphate, gallium chloride or, preferably, gallium nitrate are used.

Preferred process conditions are a temperature of from 400 to 550 °C, a pressure of 3 to 30 x $10^5$ Pa (3 to 30 bar) and a space velocity of from 0.5 to 5 g/g/h.

The desired gasoline boiling range product of reduced sulphur content and increased aromaticity may be recovered by any suitable means, usually by fractionation.

The invention will now be illustrated with reference to the following Examples.

Example 1 Preparation of catalysts

A commercially available crystalline zeolite having a $SiO_2/Al_2O_3$ molar ratio of 250 and having an X-ray diffraction pattern showing the presence of ZSM-5 and absence of any other crystalline phase was ion exchanged in its $H^+$ form with gallium as follows:

80 g of zeolite were refluxed for 1 hour in a 0.05 M solution of gallium nitrate. The sample was washed with distilled water, dried (120 °C, 16 h) and then calcined at 540 °C for 2 h.

The resulting gallium-containing aluminosilicate (Catalyst A) contained 1 %wt gallium.

Catalysts B and C were made in substantially the same manner as Catalyst A except that for Catalyst B the zeolite was steamed at 700 °C for 2 hours prior to gallium emplacement and for Catalyst C the zeolite was not only steamed but also leached with HCl prior to gallium emplacement.

An iron-containing crystalline aluminosilicate (CIAS) having a $SiO_2/Al_2O_3$ molar ratio of 249 and a $SiO_2/Fe_2O_3$ molar ratio of 127, and having the specific X-ray diffraction pattern as described hereinbefore was treated in a substantial similar manner as the above ZSM-5 material. The resulting gallium-containing alumino-silicate (Catalyst D) contained 1.4 %wt gallium.

An aluminosilicate having a $SiO_2/Al_2O_3$ molar ratio of 280 and the specific X-ray diffraction pattern as described hereinbefore was treated in a substantial similar way as the above ZSM-5 material except that the aluminosilicate was impregnated with a solution of zinc nitrate, and the sample obtained was calcined at 540 °C for 1 hour. The resulting zinc-containing aluminosilicate (Catalyst E) contained 1 %wt zinc.

Example 2 Aromatization

Catalysts A-F were employed in the aromatization of catalytically cracked gasolines having the following properties:

| Feedstock | a | b | c |
|---|---|---|---|
| Boiling range | 70-140 °C | 85-140 °C | 85-210 °C |
| Total olefins (%wt) | 40.5 | 31.0 | 28.6 |
| Total saturates (%wt) | 48.0 | 38.1 | 24.9 |
| Total aromatics (%wt) | 11.2 | 30.2 | 46.5 |
| Sulphur (ppmw) | 2390 | 1760 | 2420 |
| Nitrogen (ppmw) | 22.7 | 17.0 | 35.0 |
| MON | 79.2 | 77.0 | 81.0 |
| RON | 89.0 | 87.9 | 94.1 |

The experiments were conducted in a microflow fixed bed reactor in a once-through operation. The experiments were conducted under the conditions of temperature, pressure, space velocity and run time given in Table 1 below. The catalysts were pelleted, crushed and then the 30-80 mesh fraction retained for testing. The aromatics yields, residual sulphur content and octane of the product obtained are also given in Table 1.

Table 1

| | 1 | 2 | 3 | 4 | 5 | 6 | 7[1] | 8 | 9 | 10[2] |
|---|---|---|---|---|---|---|---|---|---|---|
| Experiment No. | | | | | | | | | | |
| Feedstock | a | a | a | b | b | c | c | c | c | c |
| Catalyst | A | A | A | B | C | A | A | A | D | E |
| **Conditions** | | | | | | | | | | |
| Temperature | 499 | 450 | 450 | 459 | 449 | 499 | 503 | 501 | 500 | 499 |
| Pressure Pa($\times10^5$) (bar a) | 11.0 | 10.0 | 3.0 | 10.5 | 11.0 | 10.6 | 10.7 | 26.1 | 11 | 11 |
| WHSV (g/g/h) | 2.0 | 2.0 | 2.0 | 2.0 | 2.0 | 2.0 | 2.0 | 2.0 | 2.0 | 2.0 |
| Run time (h) | 24 | 23 | 25 | 26 | 22 | 23 | 25 | 23 | 27 | 25 |
| **Products** | | | | | | | | | | |
| Residual sulphur in $C_5$+ product (ppmw) | 180 | 240 | 360 | 270 | 240 | 1180 | 840 | 1090 | 1000 | 720 |
| Octane MON | 94 | 90 | 89 | 91 | 91 | 89 | 92 | 90 | 90 | 84 |
| Octane RON | 110 | 102 | 99 | 104 | 105 | 102 | 107 | 105 | 104 | 96 |
| $C_5$+ yield (%wt) | 70 | 76 | 46 | 73 | 67 | 77 | 63 | 69 | 65 | 65 |
| aromatics in $C_5$+ (%wt) | 83.5 | 68.0 | 62.4 | 72.8 | 80.5 | 81.2 | 84.7 | 81.2 | 79.2 | 74.6 |

1) $H_2$/feed = 1 (mole/mole)
2) $H_2$/feed = 2 (mole/mole)

## Claims

1. Process for upgrading a sulphur-containing feedstock comprising a hydrocarbon mixture substantially boiling in the gasoline range which process comprises contacting the feedstock with a catalyst at a temperature of from 350 to 600 °C, a pressure of from 1 to 40 x $10^5$ N/m$^2$ (1 to 40 bar) and a space velocity of from 0.1 to 10 g/g/h, and recovering therefrom a product boiling in the gasoline range of increased aromaticity and decreased sulphur content, which catalyst comprises a metal(M)-containing crystalline metallo-silicate having an X-ray diffraction pattern containing the four strongest lines at interplanar spacings (d) expressed in Å, of 11.1 ± 0.2, 10.0 ± 0.2, 3.84 ± 0.07 and 3.72 ± 0.06, wherein M is at least one of the group of Ga, Mo, W and Zn, and the crystalline (metallo)silicate comprises a crystalline aluminosilicate having a $SiO_2/Al_2O_3$ molar ratio of at least 20, or an iron-containing (alumino)-silicate having a $SiO_2/Fe_2O_3$ molar ratio of 25 to 1000, and in case alumina is present a $SiO_2/Al_2O_3$ molar ratio of 20 to 1200.

2. Process according to claim 1, wherein the hydrocarbon mixture has been obtained by catalytic cracking.

3. Process according to claim 1 or 2, wherein the hydrocarbon mixture is a fraction boiling in the range of 70 to 220 °C, preferably from 70 to 180 °C.

4. Process according to any one of claims 1-3, wherein the feedstock comprises more than 50 ppmw of sulphur.

5. Process according to any one of claims 1-4, wherein hydrogen is coprocessed with the feedstock.

6. Process according to any one of claims 1-5, wherein the crystalline (metallo)silicate comprises from 0.01 to 10 %wt of the metal.

7. Process according to any one of claims 1-6, wherein the metal is gallium or zinc.

8. Process according to any one of claims 1-7, wherein the metal has been introduced after crystallization of the (metallo)silicate.

9. Process according to any one of claims 1-8, wherein the metal has been introduced into the crystalline (metallo)silicate by ion exchange under neutral or acidic conditions.

**Patentansprüche**

1. Verfahren zur Verbesserung eines schwefelhältigen Einsatzmaterials, das ein im wesentlichen im Benzinbereich siedendes Kohlenwasserstoffgemisch umfaßt, welches Verfahren ein Inberührungbringen des Einsatzmaterials mit einem Katalysator bei einer Temperatur von 350 bis 600 °C, einem Druck von 1 bis 40 x $10^5$ N/m$^2$ (1 bis 40 bar) und einer Raumgeschwindigkeit von 0,1 bis 10 g/g/h und ein Gewinnen eines im Benzinbereich siedenden Produktes daraus mit erhöhter Aromatizität und vermindertem Schwefelgehalt umfaßt, welcher Katalysator ein metall(M)hältiges kristallines Metalisilikat mit einem Röntgenbeugungsspektrum mit den vier stärksten Linien bei Zwischengitterabständen (d), ausgedruckt in Å, von 11,1 ± 0,2, 10,0 ±0,2, 3,84 ± 0,07 und 3,72 ± 0,06 umfaßt, worin M wenigstens ein Metall aus der Gruppe Ga, Mo, W und Zn ist und worin das kristalline (Metall)silikat ein kristallines Aluminosilikat mit einem $SiO_2/Al_2O_3$-Molverhältnis von wenigstens 20 oder ein eisenhältiges (Alumino)-silikat mit einem $SiO_2/Fe_2O_3$-Molverhältnis von 25 bis 1.000 und, falls Aluminiumoxid vorliegt, einem $SiO_2/Al_2O_3$-Molverhältnis von 20 bis 1.200 umfaßt.

2. Verfahren nach Anspruch 1, worin das Kohlenwasserstoffgemisch durch katalytisches Cracken erhalten worden ist.

3. Verfahren nach Anspruch 1 oder 2, worin das Kohlenwasserstoffgemisch eine im Bereich von 70 bis 220 °C, vorzugsweise von 70 bis 180 °C siedende Fraktion ist.

4. Verfahren nach einem der Ansprüche 1 bis 3, worin das Einsatzmaterial mehr als 50 Gewichtsteile pro Million an Schwefel aufweist.

5. Verfahren nach einem der Ansprüche 1 bis 4, worin Wasserstoff gemeinsam mit dem Einsatzmaterial verarbeitet wird.

6. Verfahren nach einem der Ansprüche 1 bis 5, worin das kristalline (Metall)silikat 0,01 bis 10 Gew.-% des Metalles enthält.

7. Verfahren nach einem der Ansprüche 1 bis 6, worin das Metall Gallium oder Zink ist.

8. Verfahren nach einem der Ansprüche 1 bis 7, worin das Metall nach der Kristallisation des (Metall)-silikats eingeführt worden ist.

9. Verfahren nach einem der Ansprüche 1 bis 8, worin das Metall durch Ionenaustausch unter neutralen oder sauren Bedingungen in das kristalline (Metall)silikat eingeführt worden ist.

## Revendications

1. Procédé pour améliorer une charge contenant du soufre comprenant un mélange d'hydrocarbures bouillant sensiblement dans la gamme de l'essence, procédé qui comprend les étapes consistant à mettre en contact la charge avec un catalyseur à une température comprise entre 350 et 600°C, à une pression comprise entre 1 et 40 x $10^5$ N/m$^2$ (1 et 40 bar) et à une vitesse spatiale comprise entre 0,1 et 10 g/g/h, et à récupérer de ceci un produit bouillant dans la gamme de l'essence d'aromaticité croissante et de teneur en soufre décroissante, catalyseur qui comprend un (métallo)silicate cristallin contenant un métal(M) ayant un spectre de diffraction des rayons X contenant les quatre raies les plus intenses aux espacements interplanaires (d) exprimés en Å, de 11,1 ± 0,2, 10,0 ± 0,2, 3,84 ± 0,07 et 3,72 ± 0,06, dans lequel M est au moins un métal du groupe formé par Ga, Mo, W et Zn, et le (métallo)silicate cristallin comprend un aluminosilicate cristallin ayant un rapport molaire $SiO_2/Al_2O_3$ d'au moins 20, ou un (alumino)silicate contenant du fer ayant un rapport molaire $SiO_2/Fe_2O_3$ de 25 à 1 000, et au cas où de l'alumine est présente, un rapport molaire $SiO_2/Al_2O_3$ de 20 à 1 200.

2. Procédé selon la revendication 1, dans lequel le mélange d'hydrocarbures a été obtenu par craquage catalytique.

3. Procédé selon la revendication 1 ou 2, dans lequel le mélange d'hydrocarbures est une fraction bouillant dans la gamme de 70 à 220°C, de préférence de 70 à 180°C.

4. Procédé selon l'une quelconque des revendications 1 à 3, dans lequel la charge comprend plus de 50 ppm en poids de soufre.

5. Procédé selon l'une quelconque des revendications 1 à 4, dans lequel l'hydrogène est co-traité avec la charge.

6. Procédé selon l'une quelconque des revendications 1 à 5, dans lequel le (métallo)silicate cristallin comprend de 0,01 à 10% en poids du métal.

7. Procédé selon l'une quelconque des revendications 1 à 6, dans lequel le métal est le gallium ou le zinc.

8. Procédé selon l'une quelconque des revendications 1 à 7, dans lequel le métal a été introduit après cristallisation du (métallo)silicate.

9. Procédé selon l'une quelconque des revendications 1 à 8, dans lequel le métal a été introduit dans le (métallo)silicate cristallin par échange d'ions dans des conditions neutres ou acides.